# DEMANDE DE BREVET EUROPEEN

(11) **EP 2 474 477 A1**
(43) Date de publication de la demande: **11.07.2012**
(21) Numéro de dépôt: 11193697.7
(22) Date de dépôt: 15.12.2011
(51) Int. Cl.: B64F 5/00, B29C 73/10

(54) **Pièce et procédé de réparation d'une structure endommagée, en particulier de peau d'aéronef, ainsi qu'un kit de réparation de mise en oeuvre**

(30) Priorité: 07.01.2011 FR 1150129
(71) Demandeur: Airbus Operations SAS, 31060 Toulouse (FR)
(72) Inventeur: Boulet, Nicolas, 31300 Toulouse (FR); Chaume, Olivier, 31200 Toulouse (FR); Chelin, Frédéric, 32430 Encausse (FR)
(74) Mandataire: Schwartz, Thierry J.

(57) **Abrégé**

L'invention vise à permettre une réparation rapide et efficace de structures métalliques endommagées, en particulier de peau de fuselage d'aéronef, sans nécessiter de surépaisseur nuisible aux transmissions des ondes. Pour ce faire, elle propose un double plaquage interne/externe constitué par un matériau particulier.

Selon un exemple de réalisation, la structure endommagée (2) possédant une face externe (2e) et une face interne (2i), la pièce (20) présente une double plaque interne/externe (21, 22) en extension sensiblement plane, apte à être solidarisée respectivement à la face interne (2i) et à la face externe (2e) de la structure métallique (2), et un noyau central (23) reliant les plaques interne (21) et externe (22). Une rainure (25) est ainsi formée entre ces plaques (21, 22). La pièce est constitué d'un seul bloc en matériau composite et un pli de verre (8), drapé sur la rainure (25), peut être positionné entre les plaques (21, 22) et la structure (2). Le noyau (23) peut être traversé par au moins un orifice (7) apte à laisser passer des liaisons à travers la structure (2).

## Description

### DOMAINE TECHNIQUE

L'invention se rapporte à une pièce de réparation d'une structure métallique endommagée, en particulier de peau de fuselage d'aéronef, ainsi qu'à un procédé de réparation utilisant une telle pièce. Elle prévoit également un kit de réparation apte à mettre en oeuvre ce procédé.

Traditionnellement, un aéronef présente un fuselage métallique, principalement en alliage d'aluminium, monté par assemblage de cadres, lisses et panneaux. Les zones de sondes, de portes, autres ouvertures et équivalents, sont découpées dans les panneaux du fuselage. En général, la peau du fuselage est alors renforcée en interne, autour de la découpe, en augmentant l'épaisseur localement par des « marches » (« steps » en terminologie anglaise).

Lorsque ces zones de renfort, de forte épaisseur (classiquement supérieures à 4 mm), subissent un dommage important - suite à un incident de service, feu, corrosion, etc. - une découpe de la peau endommagée est classiquement effectuée et une plaque externe, également de forte épaisseur, est fixée.

### ETAT DE LA TECHNIQUE

L'utilisation de plaques externes est par exemple décrite dans le document de brevet US 4 517 038. Dans ce document, il est préconisé de découper la partie endommagée selon une ouverture présélectionnée, d'introduire dans cette ouverture un assemblage - composé d'un empilement de couches de fibres, de dimension sensiblement identique à l'ouverture, lié à une plaque métallique de dimension supérieure - et de fixer la plaque par des rivets sur la peau de la structure endommagée. Une telle réparation n'est pas fiable, en particulier par rapport à la résistance au feu, et pose des problèmes aérodynamiques de perturbation des sondes lorsqu'elle intervient à proximité d'une sonde.

II est également connu du document de brevet EP 0 471 923 de réparer une structure d'aéronef non contrainte et endommagée par la fixation d'une plaque externe résistante au feu et constituée d'une couche de tissu de verre tissé imprégné d'une résine à durcissement à chaud. La plaque est fixée par une pluralité de moyens de serrage mécaniques.

Dans le cas où les contraintes environnementales se multiplient, ce type de réparation est difficilement applicable : l'épaisseur des plaques externes doit être limitée voire annulée à proximité des sondes pour des raisons aérodynamiques afin de ne pas perturber l'écoulement de l'air, de telles perturbations pouvant fausser les mesures des sondes.

La plaque est mise en forme manuellement ou par usinage à partir d'une tôle épaisse. Une reprise est en général nécessaire pour diminuer l'épaisseur sur son contour au niveau des lignes de fixations externes de la plaque. Ce procédé est donc long, délicat et il induit des contraintes mécaniques internes liées au procédé de fabrication.

De plus, lors du montage, des contraintes d'installation, principalement liées aux tolérances de fabrication, s'ajoutent. Par ailleurs, le désalignement des fibres neutres induit également des contraintes de flexion secondaire à la jonction.

Enfin, la réparation peut être limitée dans le temps avec des inspections intermédiaires supplémentaires : la solution finale reste toujours le remplacement du panneau tout entier, ce qui constitue le cas de figure le plus défavorable en termes de coût et d'immobilisation.

### EXPOSÉ DE L'INVENTION

L'invention vise à s'affranchir de ces contraintes de réparation et en particulier à supprimer les contraintes d'installation. Pour ce faire, elle propose un double plaquage interne/externe constitué par un matériau particulier.

Plus précisément, la présente invention a pour objet une pièce de réparation d'une structure endommagée présentant une face externe et une face interne, en particulier d'un fuselage d'aéronef. Cette pièce présente une double plaque interne/externe en extension sensiblement plane, apte à être solidarisée respectivement à la face interne et à la face externe de la structure métallique, et un noyau central reliant les plaques interne et externe de sorte à former une rainure entre ces plaques, la pièce étant constituée d'un seul bloc en matériau composite.

Une telle pièce de réparation permet de supprimer les contraintes internes et de réduire le désalignement des fibres neutres grâce à l'équilibre des forces induit par la double plaque.

Selon des modes de réalisation particuliers :
- les plaques sont de dimension et d'épaisseur déterminées en fonction de l'emplacement endommagé ;
- un pli de verre, drapé sur la rainure, est positionné entre les plaques et la structure ;
- le noyau est traversé par au moins un orifice apte à laisser passer des liaisons à travers la structure ;
- la plaque interne peut présenter plusieurs plis pour recouvrir et se solidariser à des éléments situés dans un environnement proche.

L'invention se rapporte également à un procédé de réparation d'une structure, en particulier métallique ou composite, mettant en oeuvre la pièce de réparation ci-dessus. Un tel procédé comporte des étapes de mise en forme de la pièce précédemment définie par découpage dans une préforme en matériau composite, de formation d'une ouverture élargie dans la structure permettant de retirer la partie endommagée, d'installation des plaques de part et d'autre de la structure métallique contre les faces interne et externe de cette structure, la pièce présentant un profil qui épouse alors sensiblement celui de la structure en son ouverture, de solidarisation entre les faces de la structure et les faces des plaques respectivement en regard, et de fixation mécanique transversale entre au moins l'une des plaques et la structure métallique s'étendant entre ces plaques.

Selon des modes de mise en oeuvre particuliers :
- un drapage en frais est réalisé sur les faces des plaques et sur le noyau à solidariser avec les faces de la structure, un tel drapage en frais facilitant la mise en forme de la pièce ;
- le drapage est formé par un pli de verre de sorte que la solidarisation entre la pièce de réparation et les faces de la structure métallique est réalisée à travers ce pli ;
- une dépose de la plaque interne en plis permet d'adapter l'épaisseur de cette plaque en fonction d'un recouvrement d'autres structures.

L'invention concerne également un kit de réparation apte à mettre en oeuvre ce procédé. Ce kit se compose d'une pièce de réparation définie ci-dessus pouvant être mise soit sous forme de plis à sec, de préférence accompagnée d'un pot de résine pour solidariser la pièce aux faces de la structure, soit sous forme de plaques de fibres noyées dans une matrice thermoplastique. Ce kit peut avantageusement comporter des moyens de fixations mécaniques de la pièce sur la structure.

### BRÈVE DESCRIPTION DES FIGURES

D'autres données, caractéristiques et avantages de la présente invention apparaîtront à la lecture d'un exemple de réalisation ci-après décrit, en référence aux figures annexées qui représentent, respectivement :
- les figures 1a et 1b, des vues respectivement externe et interne d'une portion de fuselage d'avion endommagé par un impact à proximité d'une sonde de Pitot, et
- la figure 2, une vue en coupe schématique d'une pièce de réparation selon l'invention après solidarisation à la peau du fuselage.

### DESCRIPTION DÉTAILLÉE

Dans la description détaillée, les qualificatifs « intérieur » ou « interne » et « extérieur » ou « externe » se rapportent, respectivement, à l'espace fermé défini à l'intérieur du fuselage de l'avion et à l'espace située en dehors de cet espace fermé.

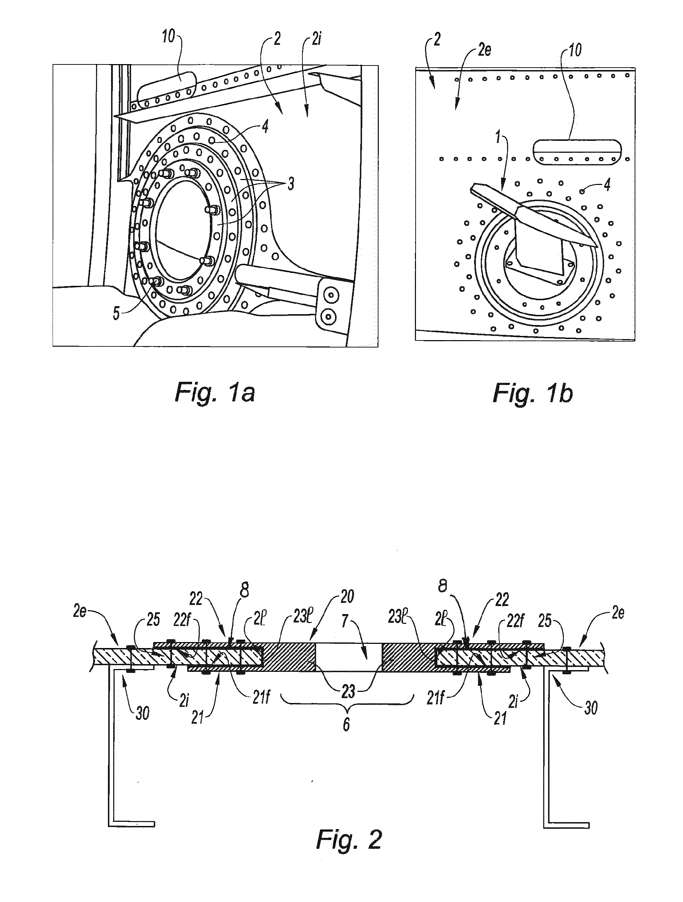

En référence à la figure 1b, une sonde de vitesse 1, un tube de Pitot dans l'exemple illustré, est fixée sur une peau 2 de fuselage d'avion en alliage d'aluminium. La fixation est renforcée en interne, comme cela apparaît sur la figure 1a, par des plis métalliques concentriques 3 solidarisés par des rivets 4 et des boulons 5. Une portion endommagée 10, formée par un impact, est positionnée à proximité de la sonde 1. Cette portion ne peut être réparée par les moyens traditionnels d'ajout d'une plaque externe, comme expliqué ci-dessus, du fait de la trop grande proximité de la sonde et de sa zone de renfort.

L'invention met en oeuvre une pièce de réparation, telle que la pièce 20 illustrée, à titre d'exemple non limitatif, sur la vue en coupe de la figure 2. Cette pièce 20 de réparation de la portion métallique endommagée 10 du fuselage s'étend de part et d'autre de la portion 10, en particulier sur les faces externe 2e et interne 2i de la peau 2 du fuselage.

La pièce de réparation fait partie d'un kit choisi en fonction des dimensions de l'ouverture élargie 6 limitée par une face latérale 2l et réalisée dans la peau 2 pour retirer la partie endommagée. Chaque kit comprend une pièce de réparation de dimension prédéfinie dans une gamme et d'un pot de résine pour solidariser la pièce aux faces de la structure à réparer, ainsi que des moyens de fixation transversale de la pièce sur la structure.

La pièce 20 est constituée d'un bloc en matériau composite, à base de fibres de carbone dans l'exemple, mis en forme par découpage dans une préforme en matériau composite.

Cette pièce 20 est formée de deux plaques en extension plane ou légèrement courbe - c'est-à-dire parallèle sensiblement à la peau du fuselage 2 - une plaque interne 21 et une plaque externe 22 reliées entre elles par un noyau central 23. Les faces en regard 21f et 22f de ces plaques 21 et 22, tournées vers la peau du fuselage 2, forment une rainure périphérique 25, la face latérale 23l du noyau 23 servant de fond de gorge. Le noyau est dans cet exemple traversé par au moins un orifice 7 apte à laisser passer des liaisons de système par exemple un câble électrique, entre l'extérieur et l'intérieur de la peau du fuselage.

Les plaques 21 et 22 sont solidarisées transversalement à la face interne 2i et à la face externe 2e de la peau 2, par des rivets 4. Ces rivets associent la peau du fuselage et les deux plaques 21 et 22, ou au moins l'une d'entre elles en fonction de la configuration.

Pour des raisons de corrosion galvanique entre carbone et aluminium, un drapage en frais de la rainure 25 a été réalisé au préalable sur les faces 21f et 22f des plaques 21 et 22 et la face latérale 23l du noyau 23. Ce drapage est formé par un pli de verre 8 positionné entre les plaques et la peau, de sorte que la solidarisation entre les plaques 21, 22, et les faces en vis-à-vis 2i et 2e de la peau 2 du fuselage est réalisée à travers ce pli. La plaque interne 2i est avantageusement conformée en plis pour s'adapter en épaisseur à son environnement. Ainsi, d'autres éléments environnants de renfort ou des pièces de forme plus ou moins complexe, telles que des pieds de support 30, peuvent être recouverts par la plaque interne 2i et solidarisés à cette plaque.

Lors du montage de la pièce de réparation 20, les plaques 21 et 22 sont installées, de part et d'autre de la peau de fuselage 2, contre les faces interne 2i et externe 2e de cette peau. La pièce 20 présente un profil qui épouse sensiblement celui de la peau 2 en son ouverture 6. Les faces 2i et 2e de la peau de fuselage 2 et les faces 21f et 22f des plaques 21 et 22, respectivement mises en contact via le pli de verre 8, sont solidarisées par la résine mise à disposition dans le kit. La mise en place s'achève par la fixation transversale des rivets 4.

L'invention n'est pas limitée aux exemples décrits et représentés. Il est par exemple possible de prévoir des pièces de révolution circulaire autour d'un axe central ou d'autres formes dérivées (elliptiques, oblongues, etc.). Par ailleurs, le matériau composite des pièces de réparation peut être à base de fibres de carbone, de verre, ou autre (aramide, carbure de calcium, etc.). De plus l'invention n'est pas limitée au domaine aéronautique et peut s'appliquer par exemple au domaine automobile.

## Revendications

1. Pièce de réparation (20) d'une structure endommagée (2) présentant une face externe (2e) et une face interne (2i), en particulier d'une peau de fuselage d'aéronef, **caractérisée en ce qu'**elle présente une double plaque interne/externe (21, 22) en extension sensiblement plane, apte à être solidarisée respectivement à la face interne (2i) et à la face externe (2e) de la structure, et un noyau central (23) reliant les plaques interne (21) et externe (22) de sorte à former une rainure (25) entre ces plaques (21, 22), la pièce étant constitué d'un seul bloc en matériau composite.

2. Pièce de réparation selon la revendication 1, dans laquelle les plaques (21, 22) sont de dimension et d'épaisseur déterminées en fonction de l'emplacement endommagé.

3. Pièce de réparation selon l'une des revendications 1 et 2, dans laquelle un pli de verre (8), drapé sur la rainure (25), est positionné entre les plaques (21, 22) et la structure (2).

4. Pièce de réparation selon l'une quelconque des revendications précédentes, dans laquelle le noyau (23) est traversé par au moins un orifice (7) apte à laisser passer des liaisons à travers la structure (2).

5. Pièce de réparation selon l'une quelconque des revendications précédentes, dans laquelle la plaque interne (2i) présente plusieurs plis pour recouvrir et se solidariser à des éléments situés dans un environnement proche.

6. Procédé de réparation d'une structure mettant en oeuvre la pièce de réparation (20) selon l'une quelconque des revendications précédentes, **caractérisé en ce que** ce procédé comporte des étapes de mise en forme de ladite pièce (20) par découpage dans une préforme en matériau composite, de formation d'une ouverture élargie (6) dans la structure (2) permettant de retirer la partie endommagée, d'installation des plaques (21, 22) de part et d'autre de la structure métallique (2) contre les faces interne (2i) et externe (2e) de cette structure, la pièce (20) présentant un profil qui épouse alors sensiblement celui de la structure (2) en son ouverture (6), de solidarisation entre les faces (2i, 2e, 2l) de la structure (2) et les faces (21f, 22f, 23l)) des plaques respectivement en regard, et de fixation mécanique transversale (4) entre au moins l'une des plaques (21, 22) et la structure métallique (2) s'étendant entre ces plaques (21, 22).

7. Procédé de réparation selon la revendication précédente, dans lequel un drapage en frais est réalisé sur les faces (21f, 22f) des plaques (21, 22) et sur le noyau (23) à solidariser avec les faces (2i, 2e, 2) de la structure (2).

8. Procédé de réparation selon l'une des revendications 6 ou 7, dans lequel le drapage est formé par un pli de verre (8) de sorte que la solidarisation entre la pièce de réparation (20) et les faces (2i, 2e, 2l) de la structure métallique (2) est réalisée à travers ce pli.

9. Procédé de réparation selon l'une quelconque des revendications 6 à 8, dans lequel une dépose de la plaque interne (21) en plis permet d'adapter l'épaisseur de cette plaque (21) en fonction d'un recouvrement d'autres structures (30).

10. kit de réparation apte à mettre en oeuvre le procédé selon l'une quelconque des revendications 6 à 9, **caractérisé en ce qu'**il se compose d'une pièce de réparation (20) selon l'une quelconque des revendications 1 à 5 mise sous forme soit de plis à sec, soit de plaques de fibres noyées dans une matrice thermoplastique
